Europäisches Patentamt

European Patent Office

Office européen des brevets

(11) Veröffentlichungsnummer: **0 116 876**
**A2**

(12) **EUROPÄISCHE PATENTANMELDUNG**

(21) Anmeldenummer: **84100974.9**

(22) Anmeldetag: **01.02.84**

(51) Int. Cl.³: **B 60 J 3/00**

(30) Priorität: **03.02.83 UY 21838**

(43) Veröffentlichungstag der Anmeldung:
**29.08.84 Patentblatt 84/35**

(84) Benannte Vertragsstaaten:
**AT BE CH DE FR GB IT LI LU NL SE**

(71) Anmelder: **Recknagel, Friedrich Wilhelm**
**Feldstrasse 28**
**D-8671 Selbitz(DE)**

(71) Anmelder: **Recknagel, Maria Christina**
**Feldstrasse 28**
**D-8671 Selbitz(DE)**

(72) Erfinder: **Oxandabarat, Sergio Domingo**
**Enrique Martinez 2078**
**Montevideo(UY)**

(72) Erfinder: **Quintela, Ruben René**
**Canstatt 3052**
**Montevideo(UY)**

(74) Vertreter: **LOUIS, PÖHLAU, LOHRENTZ & SEGETH**
**Kesslerplatz 1**
**D-8500 Nürnberg(DE)**

(54) **Vorrichtung zum Blendungsschutz.**

(57) Vorrichtung (1) zum Blendungsschutz, die eine sich verjüngende Grundflächengestalt (2) und eine Lichtdurchlassigkeit aufweist, die kleiner als die von Glas ist. Die Vorrichtung (1) kann undurchsichtig sein oder eine veränderbare Lichtdurchlässigkeit aufweisen. Die Vorrichtung (1) kann dabei als Platte ausgebildet sein, die entlang einer Stange (6) verschiebbar und um die Stange (6) schwenkbar gelagert ist, oder sie kann als Folie, als dünner, mit Flüssigkeit füllbarer Hohlkörper oder als elektronisches Flüssigkristall-Anzeigefeld ausgebildet sein.

*FIG.8*

- 1 -

Vorrichtung zum Blendungsschutz
-----------------------------------

Die Erfindung betrifft eine Vorrichtung zum Blendungsschutz.

Es sind Brillen mit getönten und entspiegelten Gläsern
oder mit phototroben Gläsern bekannt. Die zuletzt genannten Gläser ändern den jeweiligen Lichtverhältnissen
entsprechend ihre Färbung und somit ihre Lichtdurchlässigkeit, wobei diese Veränderung der Färbung zeitlich
mehr oder weniger verzögert stattfindet.

Es sind beispielsweise auch getönte Kraftfahrzeugscheiben
bekannt, die in erster Linie jedoch einen Schutz gegen
Infrarotstrahlen bilden, während sie beispielsweise gegen

- 2 -

den in der Nacht aus weiter Entfernung mit aufgeblendeten Scheinwerfern entgegenkommenden Verkehr keinen wirksamen Schutz darstellen. Bei Kraftfahrzeugen behilft man sich gegen den entgegenkommenden Verkehr oftmals auch mit den üblichen, unter dem Autodach montierten Sonnenblenden. Nach längerer Nachtfahrt kann es jedoch dazu kommen, dass auch der mit abgeblendeten Scheinwerfern entgegenkommende Verkehr als störend empfunden wird, so dass die Verkehrssicherheit beeinträchtigt wird. Diese Beeinträchtigung gilt für Autofahrer genauso wie für Motorradfahrer, die einen Sturzhelm benutzen. Diese Beeinträchtigung gilt aber auch für Fussgänger in der Nacht.

Deshalb liegt der vorliegenden Erfindung die Aufgabe zugrunde, eine Vorrichtung der eingangs genannten Art zur Verfügung zu stellen, die ohne die Verkehrssicherheit zu beeinträchtigen, sehr wirkungsvoll ist und die sehr einfach aufgebaut sein kann.

Diese Aufgabe wird erfindungsgemäss dadurch gelöst, dass die Vorrichtung eine sich verjüngende Grundflächengestalt und eine Lichtdurchlässigkeit aufweist, die kleiner als die von Glas ist.

Damit kann in einfacher Weise eine durch das Abblend- oder Fernlicht eines entgegenkommenden Fahrzeuges mögliche Blendung wirkungsvoll verhindert werden. Der erfindungsgemässe Blendungsschutz kann dabei sowohl in Ländern mit Rechtsverkehr, als auch in Ländern mit Linksverkehr gleich gut angewandt werden.

Bei einer Ausführungsform der Erfindung ist die Vorrichtung undurchsichtig. Bei einer anderen Ausführungsform der Erfindung weist die Vorrichtung eine veränderbare Lichtdurchlässigkeit auf.

Dabei kann die sich konisch verjüngende Grundflächengestalt der Vorrichtung eine trapezförmige oder eine dreieckförmige Gestalt aufweisen.

Bei einer Ausführungsform der Erfindung ist die Vorrichtung als selbsttragende Platte ausgebildet, die durchscheinend gefärbt oder undurchsichtig sein kann. Beispielsweise kann sie auch versilbert od. dgl. sein.

Bei einer bevorzugten Weiterbildung der Erfindung ist die Platte entlang einer Stange verschiebbar und um die Stange schwenkbar gelagert. Damit ist eine den jeweiligen Verkehrsverhältnissen und den Verhältnissen des Benutzers bezüglich seiner Grösse und Statur einfach anpassbare Vorrichtung zum Blendungsschutz möglich, die gleichzeitig auch als Blendungsschutz gegen Sonneneinstrahlung benutzbar ist bzw. die durch einfaches Verschwenken beispielsweise um die an der Innenseite der Windschutzscheibe eines Kraftfahrzeuges aus dem Gesichtsfeld des Fahrers weg schwenkbar ist. Die Stange, an welcher die Platte befestigt ist, kann mindestens zwei Befestigungsmittel, beispielsweise in Form von Saugnäpfen, aufweisen. Eine derartige, erfindungsgemässe Vorrichtung eignet sich sehr gut für den nachträglichen Einbau in jedes beliebige Kraftfahrzeug, bzw. auch zum Einbau in Lastkraftwagen.

Bei einer weiteren Ausbildung der Erfindung ist die eine konisch sich verjüngende Grundflächengestalt aufweisende Vorrichtung als Folie ausgebildet. Eine derartige Folie kann selbstklebende Eigenschaften aufweisen, so dass sie sehr einfach beispielsweise auf dem Sichtfenster eines Motorradhelmes oder auf den Gläsern von Brillen befestigt werden kann.

Daraus folgt jedoch unmittelbar, dass die Aussenabmessungen der erfindungsgemässen Vorrichtung in der Grössenordnung zwischen einigen Millimetern für Augengläsern, einigen Zentimetern für Motorradhelme und einigen Dezimetern für Autowindschutzscheiben variieren können.

Bei einer weiteren Ausbildung der Erfindung ist die Vorrichtung als mit einer Flüssigkeit füllbarer Hohlkörper geringer Dicke ausgebildet. Die Flüssigkeit kann gefärbt sein, so dass auch bei dieser Ausführungsform der Erfindung ein gut wirksamer Blendungsschutz möglich ist.

Erfindungsgemäss kann die Vorrichtung auch ein elektronisches Flüssigkristall-Anzeigefeld sein. Das Flüssigkristall-Anzeigefeld kann dabei aus einer Vielzahl dicht nebeneinander angeordneter Flüssigkristallsegmente aufgebaut sein, die beispielsweise durch einen elektronischen Leuchtdichtesensor angesteuert und mittels einer Interface-Schaltung automatisch angesteuert werden. Damit ist eine automatisch funktionierende Blendungsschutz-Vorrichtung gegeben.

Weitere Einzelheiten, Merkmale und Vorteile ergeben sich aus der nachfolgenden Beschreibung von Ausführungsbeispielen der Erfindung.

Es zeigen:

| Figur 1 | eine Vorrichtung zum Blendungsschutz in Frontansicht, |
| Figur 2 | eine Vorrichtung gemäss Figur 1 in Seitenansicht, |
| Figur 3 | eine Stange zur Lagerung einer Vorrichtung gemäss den Figuren 1 und 2, |
| Figur 4 | eine mit einer Stange gemäss Figur 3 komplettierte Vorrichtung zum Blendungsschutz, |
| Figur 5 | eine Vorrichtung gemäss Figur 4 auf einer Kraftfahrzeug-Windschutzscheibe, |
| Figur 6 | eine auf Brillengläsern angeordnete Vorrichtung zum Blendungsschutz, |
| Figur 7 | eine auf einer Kraftfahrzeug-Windschutzscheibe angeordnete Vorrichtung zum Blendungsschutz und |
| Figur 8 | eine Darstellung, aus der die Wirkungsweise der Vorrichtung zum Blendungsschutz besonders deutlich ersichtlich wird. |

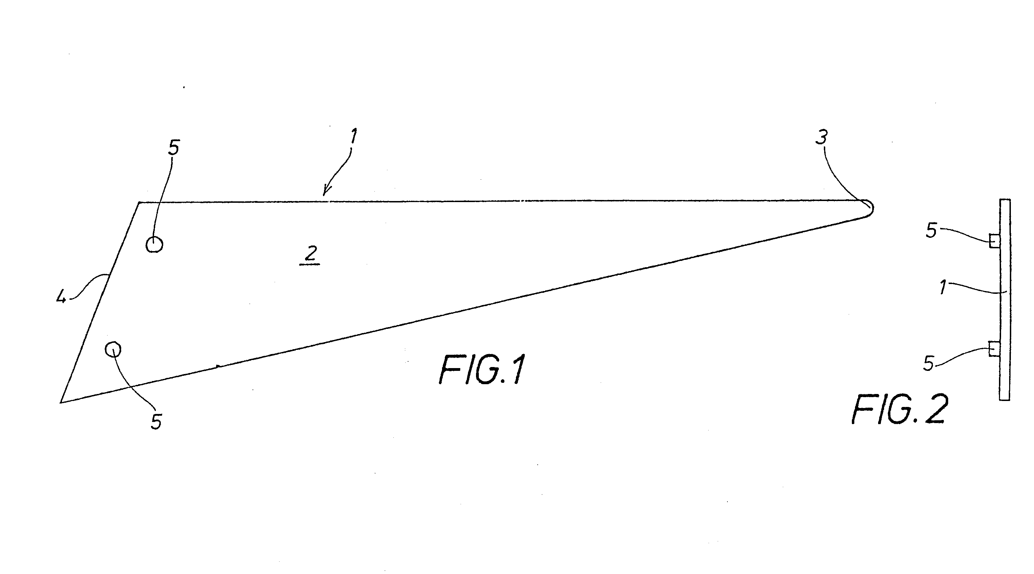

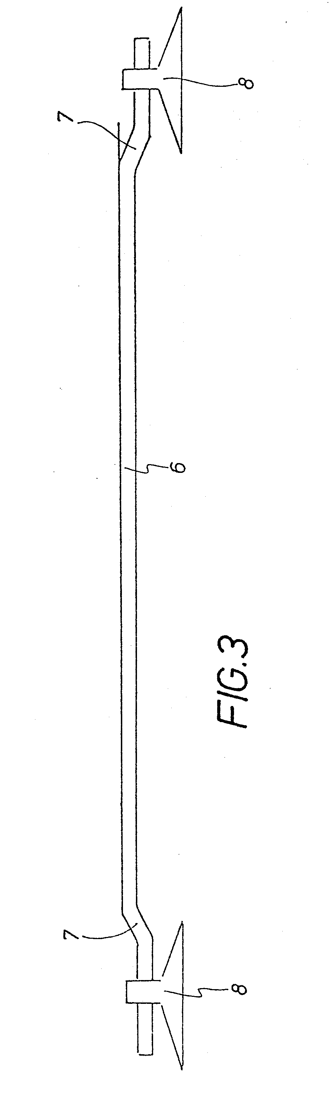

Figur 1 zeigt eine Vorrichtung 1 zum Blendungsschutz, die eine sich verjüngende Grundflächengestalt 2 und eine Lichtdurchlässigkeit aufweist, die kleiner als die von Glas ist. Die Vorrichtung 1 kann undurchsichtig sein, oder eine veränderbare Lichtdurchlässigkeit aufweisen. Die dargestellte Vorrichtung 1 weist eine schiefwinkelig dreieckige Grundfläche 2 mit einer abgerundeten Kante 3 auf; die Grundfläche 2 kann jedoch auch trapezförmig ausgebildet sein. In der Nähe der Grundlinie 4 der Vorrichtung 2 sind an die plattenförmige Vorrichtung 1 - wie auch aus Figur 2 ersichtlich ist - zwei Ansätze 5 angeformt, welche mit der in Figur 3 dargestellten Stange 6 verbindbar sind. Die plattenförmige Vorrichtung 1 kann beispielsweise getönt gefärbt und damit durchscheinend ausgebildet sein; sie kann auch eine versilberte oder ähnliche Oberfläche aufweisen.

Die in Figur 3 dargestellte Stange ist an ihren beiden Enden mit einem Knick 7 abgebogen und weist zwei Befestigungsmittel 8 in Form von Saugnäpfen auf. Mit diesen Saugnäpfen 8 kann die Stange 6 und damit die Vorrichtung 1 zum Blendungsschutz in einfacher Weise auf der Innenseite einer Windschutzscheibe eines Personen- oder Lastkraftwagens befestigt werden, wobei sich eine derartige Ausführungsform der Erfindung in vorteilhafter Weise auch für den nachträglichen Einbau in ein Fahrzeug eignet.

Die Befestigungsmittel können auch die Form von Laschen aufweisen, mit welchen die Stange 6 und damit die Vorrichtung 1 zum Blendungsschutz an der Karosserie eines Fahrzeuges befestigt werden kann.

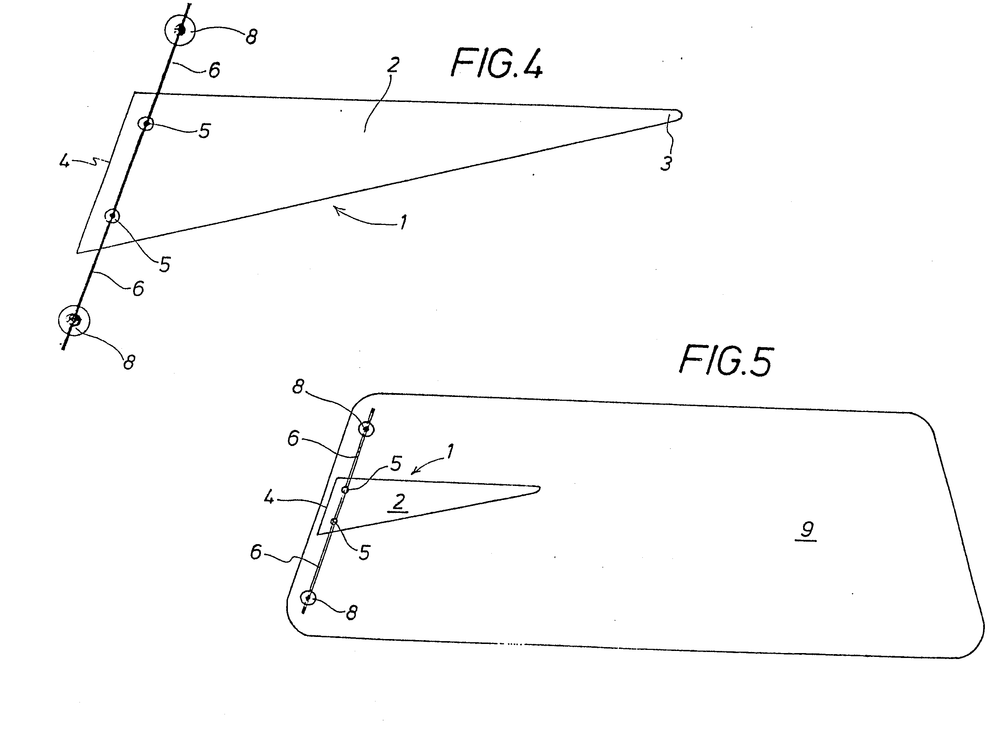

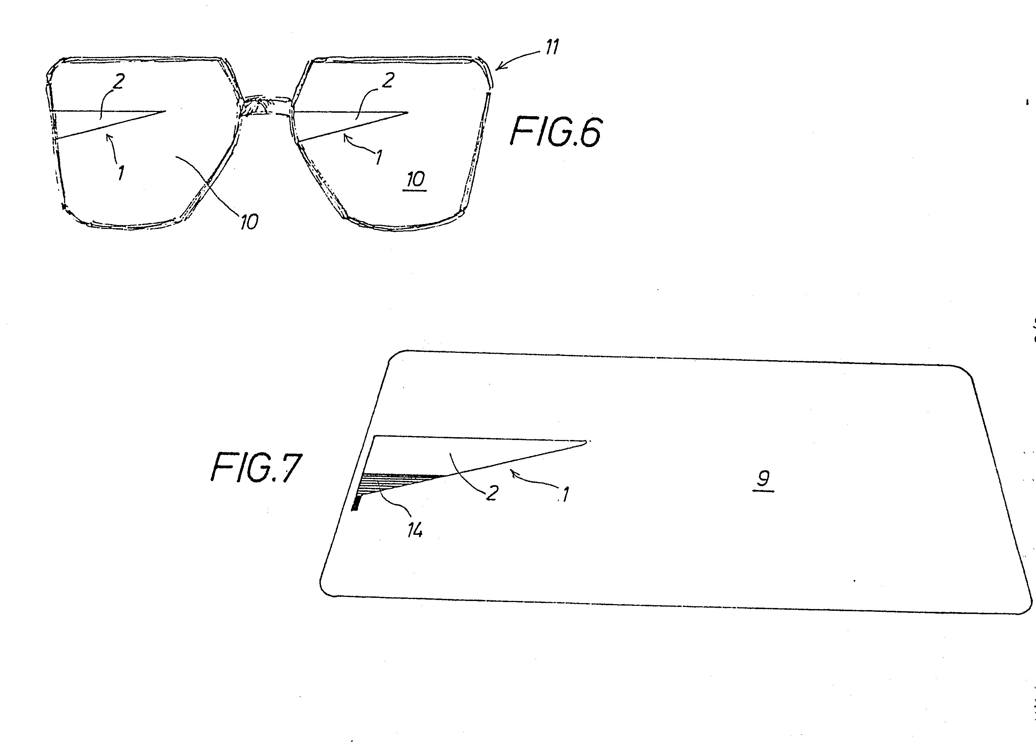

Figur 4 zeigt eine Vorrichtung 1 zum Blendungsschutz, die aus einer Platte mit schiefwinkelig dreieckiger Grundfläche 2 und einer Stange 6 aufgebaut ist. Die Platte weist Ansätze 5 auf, mit denen die Platte an der Stange 6 verschiebbar und schwenkbar gelagert ist. Aus Sicherheitsgründen ist die Vorderkante 3 der Platte abgerundet. An den beiden Enden der Stange 6 sind Befestigungsmittel 8 in Form von Saugnäpfen angeordnet. Mit diesen Saugnäpfen 8 kann die Vorrichtung 1 zum Blendungsschutz an der Innenseite der Windschutzscheibe 9 eines Kraftfahrzeuges befestigt werden, wie aus Figur 5 ersichtlich ist.

Durch die erfindungsgemässe Ausgestaltung kann die Platte dreieckförmiger Grundfläche 2 entlang der Stange 6 auf und ab verschoben werden, so dass sich ein einfach den jeweiligen Verhältnissen angepasster Blendungsschutz ergibt.

Die Grundlinie 4 der Platte verläuft zur Stange 6, die mit den Befestigungselementen 8 an der Innenseite einer Windschutzscheibe 9 befestigt ist, parallel. Die Stange 6 ist von der Windschutzscheibe 9 so weit entfernt, dass die Vorrichtung 1 auch von der Windschutzscheibe 9 weg geschwenkt werden kann.

Durch die Vorrichtung 1 zum Blendungsschutz werden nur zwischen 5 % und 8 % des gesamten Gesichtsfeldes eines Fahrers bedeckt, so dass die Verkehrssicherheit nicht beeinträchtigt wird. Mit dieser minimalen Bedeckung ergibt sich jedoch in vorteilhafter Weise ein 92-%-iger bis 95-%-iger Blendungsschutz. Ein weiterer Vorteil liegt darin, dass die erfindungsgemässe Vorrichtung 1, welche Abmessungen von beispielsweise 140 mm x 450 mm aufweisen kann, auch als Sonnenschutz sowohl bei einem Sonneneinfall von vorne, als auch bei einem Sonneneinfall von der Seite her benutzt werden kann. Die Grundlinie 4 kann jedoch in Abhängigkeit vom Fahrzeugtyp auch kürzer oder länger als 140 mm sein; desgleichen kann die Längsausdehnung der Vorrichtung 1 ein anderes Mass als 450 mm aufweisen.

Figur 6 zeigt eine Vorrichtung 1 zum Blendungsschutz, die aus Folien aufgebaut ist, welche eine dreieckförmige Grundfläche 2 aufweisen. Die Folien können selbstklebend und auf den Gläsern 10 einer Brille 11 festgeklebt sein. Ähnliche Folien können auch beim Sichtschirm eines Motorrad-Sturzhelmes angewandt werden.

Figur 7 zeigt eine Vorrichtung 1 zum Blendungsschutz, die als Hohlkörper mit dreieckförmiger Grundfläche 2 und geringer Dicke ausgebildet ist. Der auf der Windschutzscheibe 9 befestigbare Hohlkörper ist mit einer Flüssigkeit 14 füllbar. Die Flüssigkeit ist so gefärbt, dass sich ein wirkungsvoller Blendungsschutz ergibt. Durch gezielte Flutung der Flüssigkeit kann der Blendungsschutz den jeweiligen Verkehrsverhältnissen und auch den persönlichen Verhältnissen des Benutzers einer solchen Vorrichtung 1 angepasst werden.

Statt einer gefärbten Flüssigkeit, deren Pegel in der Höhe veränderbar ist, kann die Vorrichtung 1 zum Blendungsschutz auch ein entsprechend gefärbtes elektronisches Flüssigkristall-Anzeigefeld sein, deren Lichtdurchlässigkeit mittels eines elektronischen Leuchtdichtesensors bestimmt und automatisch mittels eines Interfaces verstellbar ist.

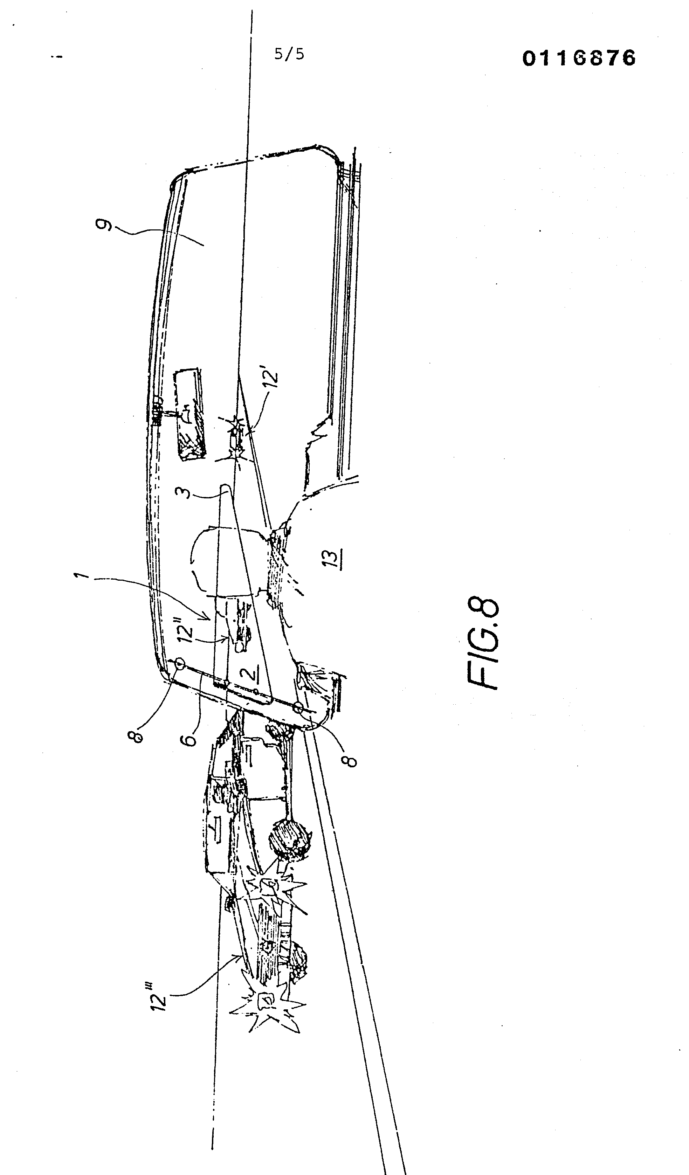

Die Figur 8 verdeutlicht in eindrucksvoller Weise die Wirkungsweise der erfindungsgemässen Vorrichtung 1, die der in Figur 5 dargestellten Vorrichtung 1 entspricht, bei welcher die Vorrichtung 1 mittels einer Stange 6 auf der Innenseite der Windschutzscheibe 9 eines Kraftfahrzeuges befestigt ist, wobei die Befestigung mittels zweier an der Stange 6 angeordneter Befestigungsmittel 8 in Form von Saugnäpfen geschieht.

Dadurch, dass der mit Abblend- oder Fernlicht entgegenkommende Verkehr bei 12' noch sehr weit entfernt ist, sind die den Fahrer 13 erreichenden Strahlenkegel sehr

0116876

klein, so dass die Vorrichtung 1 an der bei Rechtsverkehr
an der rechten, bzw. bei Linksverkehr auf der linken, d.h.
stets in der Mitte der Windschutzscheibe 9 befindlichen
Kante 3 schmal sein kann.

Die Lichtkegel des sich nähernden Verkehrs sind bei 12''
schon grösser, so dass hier die Vorrichtung 1 breiter
sein muss als an der Kante 3. Damit ergibt sich jedoch
eine Vorrichtung 1 mit einer auf der Seite der Windschutzscheibe 9 breiten und sich zur Mitte der Windschutzscheibe 9 hin verjüngenden Grundfläche 2, die bei
einer Grösse von 5 % bis 8 % des gesamten durch die Windschutzscheibe 9 gegebenen Gesichtsfeld einen 92-%-igen
bis 95-%-igen Blendungsschutz ergibt, der bei Links- und
bei Rechtsverkehr gleich gut verwendbar ist.

Die Vorrichtung 1 kann in der Höhe entlang der Stange 6
verschiebbar sein und auch als Schutz gegen Sonnenblendung benutzt bzw. um die Stange 6 aus dem Blickfeld weg
schwenkbar sein.

- 1 -

Ansprüche:
----------

1. Vorrichtung zum Blendungsschutz,
   dadurch gekennzeichnet,
   dass die Vorrichtung (1) eine sich verjüngende Grundflächen-Gestalt (2) und eine Lichtdurchlässigkeit aufweist, die kleiner als die von Glas ist.

2. Vorrichtung nach Anspruch 1,
   dadurch gekennzeichnet,
   dass die Vorrichtung (1) undurchsichtig ist.

3. Vorrichtung nach Anspruch 1,
   dadurch gekennzeichnet,
   dass die Vorrichtung (1) eine veränderbare Lichtdurchlässigkeit aufweist.

0116876

4. Vorrichtung nach einem der Ansprüche 1 bis 3,
   dadurch gekennzeichnet,
   dass die Vorrichtung (1) eine trapezförmige Gestalt
   (2) aufweist.

5. Vorrichtung nach einem der Ansprüche 1 bis 3,
   dadurch gekennzeichnet,
   dass die Vorrichtung (1) eine dreieckförmige Gestalt
   (2) aufweist.

6. Vorrichtung nach einem der Ansprüche 1 bis 5,
   dadurch gekennzeichnet,
   dass die Vorrichtung (1) als selbsttragende Platte
   ausgebildet ist.

7. Vorrichtung nach Anspruch 6,
   dadurch gekennzeichnet,
   dass die Platte entlang einer Stange (6) verschiebbar
   und um die Stange (6) schwenkbar gelagert ist.

8. Vorrichtung nach Anspruch 7,
   dadurch gekennzeichnet,
   dass die Stange (6) mindestens zwei Befestigungsmittel
   (8) aufweist.

9. Vorrichtung nach einem der Ansprüche 1 bis 5,
   dadurch gekennzeichnet,
   dass die Vorrichtung (1) als Folie ausgebildet ist.

10. Vorrichtung nach einem der Ansprüche 1 bis 5,
    dadurch gekennzeichnet,
    dass die Vorrichtung (1) als mit einer Flüssigkeit
    (11) füllbarer Hohlkörper geringer Dicke ausgebildet
    ist.

11.  Vorrichtung nach einem der Ansprüche 1 bis 5,
     dadurch gekennzeichnet,
     dass die Vorrichtung (1) ein elektronisches Flüssigkristall-Anzeigefeld ist.

12.  Vorrichtung nach einem der Ansprüche 1 bis 11,
     dadurch gekennzeichnet,
     dass die Lichtdurchlässigkeit der Vorrichtung (1)
     manuell oder mittels eines elektronischen Leucht-
     dichtesensors automatisch verstellbar ist.

FIG.2

FIG.1

0116876

FIG.3

FIG.4

FIG.5

FIG.6

FIG.7

FIG.8